# EUROPEAN PATENT APPLICATION

(11) **EP 4 523 528 A1**
(43) Date of publication of application: **19.03.2025**
(21) Application number: 23823960.2
(22) Date of filing: 14.06.2023
(51) Int. Cl.: A01K 85/16, A01K 85/00

(54) **FISHING LURE AND EXTERIOR MEMBER OF FISHING LURE**

(30) Priority: 15.06.2022 JP 2022096588
(71) Applicant: DRT Inc., Otsu-shi, Shiga 520-0101 (JP)
(72) Inventor: SHIRAKAWA, Tomoya, Otsu-shi, Shiga 520-0104 (JP)
(74) Representative: Manitz Finsterwald Patent- und Rechtsanwaltspartnerschaft mbB
(86) International application number: PCT/JP2023/022133
(87) International publication number: WO 2023/243670

(57) **Abstract**

A fishing lure (10) includes a core body (11) and a swing member (12) attached to the core body (11). The swing member (12) is formed from a sheet-like flexible material and is configured to be swingable with respect to the core body (11). The swing member (12) is configured to be attached to the core body (11) in a detachable manner. In addition, the swing member (12) is attached to the core body (11) in such a way as to store the core body (11) to the inside thereof, and is an exterior member constituting an exterior of the fishing lure (10).

## Description

### TECHNICAL FIELD

The present invention relates to a fishing lure used in fishing.

### BACKGROUND ART

Conventionally known is what is called a lure fishing in which a lure is used to fish a target fish. The angler casts the lure and manipulates a rod to retrieve the lure while giving an action to the lure such that its movement resembles the movement of a bait that is a small fish, crustacean, worm or the like. This lures the target fish into biting the lure.

In the lure fishing, there are cases when a lure called a big bait (hereinafter the lure is referred to as a "big bait") is used (see PTL 1). The big bait generally refers to such a lure that is approximately 200 mm or more in overall length and 2 oz (approximately 57 g) or more in weight, a large one exceeding 300 mm in overall length and 10 oz in weight. The big bait has been paid attention in recent years as a lure suitable for fish eaters such as the black bass in freshwater and the sea bass in seawater.

Various kinds of lures different in shape and size are circulated in markets. For example, a lure imitating the form of a bait to be preyed on is known. Well-known lures of this type include ones designed to realize a realistic movement underwater, such as a hard lure (see PTL 1) in which a plurality of body portions formed from a hard material are connected to each other, or a soft lure (see PTL 2) that is in whole or in part formed from a soft material.

### CITATION LIST

### [PATENT LITERATURE]

[PTL 1] Japanese Patent Application Publication No. 2019-216657
[PTL 2] Japanese Patent Application Publication No. 2010-22307

### SUMMARY OF THE INVENTION

### PROBLEMS TO BE SOLVED BY THE INVENTION

The conventional hard lure is intended to realize a realistic movement of a bait by causing the body portions to bend at connection portions of the divided body portions. However, the whole body of the hard lure is bent like being folded at the connection portions, appearing to move unnaturally, thus lacking reality. In addition, the conventional soft lure is intended to realize a realistic movement of a bait by using forces received during the retrieving to change the part formed from the soft material into a curved shape. However, since the soft lure moves regularly during the retrieving, its motion is unnatural, thus lacking reality.

The present disclosure has been made in view of such conventional circumstances, and it is an object of the present invention to provide a fishing lure and an exterior member of a fishing lure that can realize a realistic movement of a bait.

### SOLUTION TO THE PROBLEMS

A fishing lure according to an aspect of the present disclosure includes: a core body; and a swing member attached to the core body, formed from a sheet-like flexible material, and swingable with respect to the core body.

An exterior member according to another aspect of the present disclosure constitutes an exterior of a fishing lure, wherein the exterior member is attached to a core body of the fishing lure in a detachable manner, and is formed from a sheet-like flexible material.

### ADVANTAGEOUS EFFECTS OF THE INVENTION

According to the present disclosure, it is possible for a fishing lure to realize a realistic movement of a bait.

### BRIEF DESCRIPTION OF THE DRAWINGS

[FIG. 1] FIG. 1 is a side diagram showing a fishing lure according to a first embodiment of the present disclosure.
[FIG. 2A] FIG. 2A is a side diagram showing a side of an exterior body of the fishing lure according to the first embodiment of the present disclosure.
[FIG. 2B] FIG. 2B is a perspective diagram showing the exterior body of the fishing lure according to the first embodiment of the present disclosure viewed obliquely from above at side.
[FIG. 3] FIG. 3 is a diagram showing openings provided on the exterior body of the fishing lure according to the first embodiment of the present disclosure.
[FIG. 4] FIG. 4 is a perspective diagram showing a core body of the fishing lure according to the first embodiment of the present disclosure.
[FIG. 5] FIG. 5 is a side diagram showing the core body of the fishing lure according to the first embodiment of the present disclosure.
[FIG. 6] FIG. 6 is a top diagram showing the core body of the fishing lure according to the first embodiment of the present disclosure.
[FIG. 7] FIG. 7 is a front diagram showing the core body of the fishing lure according to the first embodiment of the present disclosure.
[FIG. 8] FIG. 8 is a diagram showing a movement of the fishing lure according to the first embodiment of the present disclosure underwater.
[FIG. 9] FIG. 9 is a front perspective diagram showing a core body of a fishing lure according to a second embodiment of the present disclosure.
[FIG. 10] FIG. 10 is a rear perspective diagram showing the core body of the fishing lure according to the second embodiment of the present disclosure.
[FIG. 11] FIG. 11 is a side diagram showing the core body of the fishing lure according to the second embodiment of the present disclosure.
[FIG. 12] FIG. 12 is a cross section diagram showing a cross-sectional structure of the core body of the fishing lure according to the second embodiment of the present disclosure.
[FIG. 13] FIG. 13 is a diagram showing a movement of the fishing lure according to the second embodiment of the present disclosure underwater.
[FIG. 14] FIG. 14 is a side diagram showing a fishing lure according to a third embodiment of the present disclosure.
[FIG. 15] FIG. 15 is a side diagram showing a fishing lure according to a fourth embodiment of the present disclosure.
[FIG. 16] FIG. 16 is a side diagram showing a side of an exterior body of the fishing lure according to the fourth embodiment of the present disclosure.
[FIG. 17] FIG. 17 is a perspective diagram showing a core body of the fishing lure according to the fourth embodiment of the present disclosure.
[FIG. 18] FIG. 18 is a side diagram showing the core body of the fishing lure according to the fourth embodiment of the present disclosure.
[FIG. 19] FIG. 19 is a top diagram showing the core body of the fishing lure according to the fourth embodiment of the present disclosure.
[FIG. 20] FIG. 20 is a bottom diagram showing the core body of the fishing lure according to the fourth embodiment of the present disclosure.
[FIG. 21] FIG. 21 is a diagram showing a movement of the fishing lure according to the fourth embodiment of the present disclosure underwater.

### DESCRIPTION OF EMBODIMENTS

The following describes embodiments of the present disclosure with reference to the accompanying drawings. It should be noted that the following embodiments are examples of specific embodiments of the present disclosure and should not limit the technical scope of the present disclosure.

### [First embodiment]

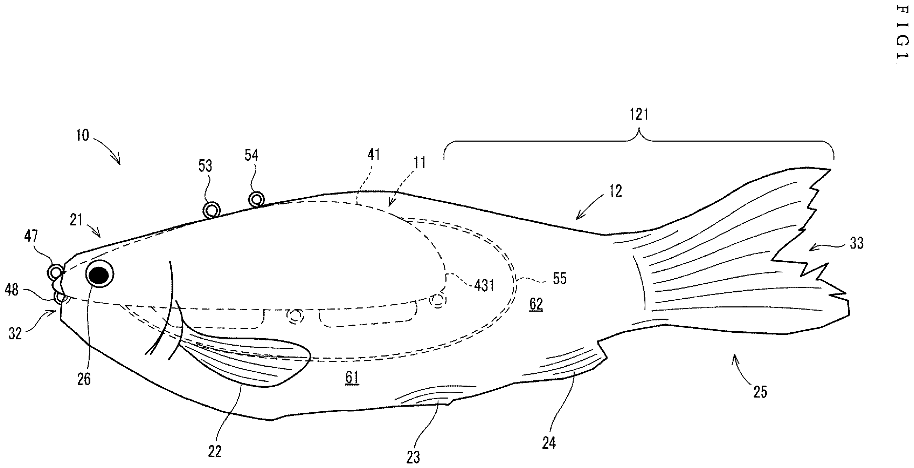

FIG. 1 is a side diagram showing a fishing lure 10 (an example of a fishing lure of the present disclosure) according to a first embodiment of the present disclosure.

The fishing lure 10 (hereinafter merely referred to as "lure 10") is used in the lure fishing such as the bass fishing or salt lure fishing to lure a target fish into biting. The lure 10 is relatively large, for example, approximately 300 mm in overall length. It is noted that the shape and size of the lure 10 disclosed in the present embodiment are merely an example, and the fishing lure of the present disclosure is not limited to the shape and size of the lure 10.

As shown in FIG. 1, the lure 10 is formed in a shape imitating a bait that is preyed on by the target fish. Specifically, the lure 10 is formed in a shape imitating a type of fish (bait fish) that is preyed on.

It is noted that not limited to the shape imitating the bait fish, the lure 10 may be formed in a shape imitating any of various living things to be a bait, such as a squid, shrimp, crab, frog, tadpole, lizard, or worm, that is preyed on by the target fish. In addition, the shape of the lure 10 is not limited to a shape imitating the bait. The shape of the lure 10 may be totally different from the shape of the bait.

The lure 10 mainly includes a core body 11 (an example of a core body of the present disclosure) and an exterior body 12 (an example of a swing member and an exterior member of the present disclosure).

The core body 11 is provided in the lure 10 and is a core part of the lure 10. The core body 11 is formed from a hard resin material such as ABS resin. The core body 11 is formed to have approximately half the overall length of the lure 10.

The exterior body 12 is attached to the core body 11. In the present embodiment, the exterior body 12 is attached to the core body 11 in a detachable manner. The exterior body 12 is an exterior member that constitutes at least an outer surface (exterior surface) of the lure 10. The exterior body 12 is formed from a sheet-like flexible material. The exterior body 12 is formed to have approximately twice the overall length of the core body 11. A part of a front side of the exterior body 12 is attached to the core body 11 in a detachable manner. In the present embodiment, the core body 11 is disposed at a front side of a hollow portion inside the exterior body 12. As a result, in a state where the exterior body 12 is attached to the core body 11, a tail portion 121 (an example of an extension portion of the present disclosure) that is from a vicinity of a center of the exterior body 12 in a front/rear direction to a rear edge portion of the exterior body 12, extends out rearward from a rear edge portion 431 of the core body 11. With this configuration, when the lure 10 is thrown into water, a force that is caused when a rod action is applied, the water flow and water pressure underwater, or the like cause the exterior body 12 to move in an irregular swinging motion with respect to the core body 11. In particular, the tail portion 121 of the exterior body 12 is caused to move in an irregular swinging motion by a slight water flow or water pressure.

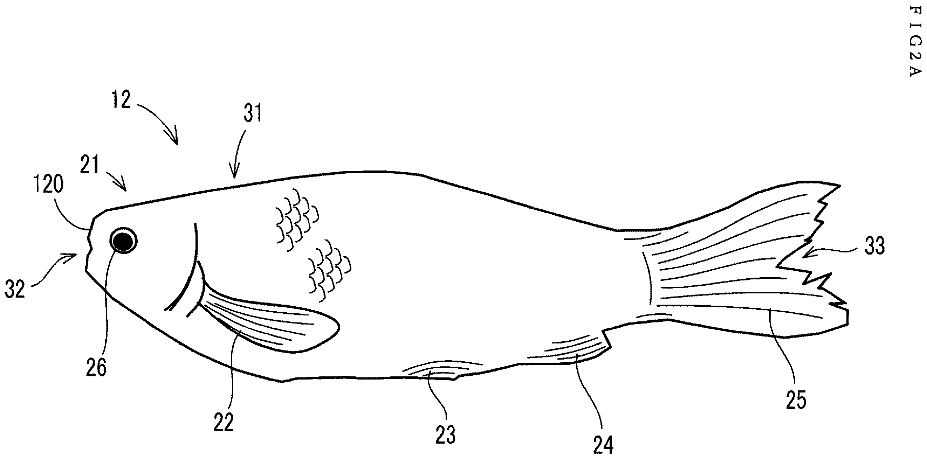

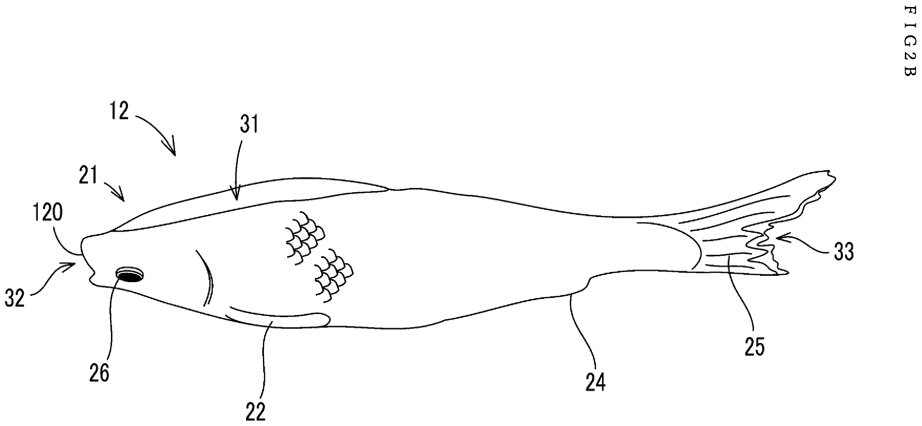

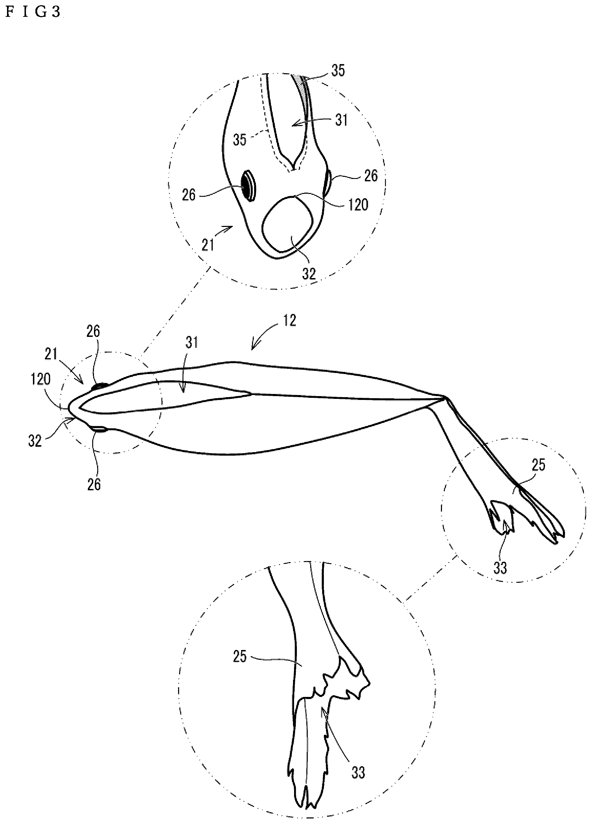

FIG. 2A and FIG. 2B are diagrams showing the exterior body 12 of the lure 10. FIG. 2A is a side diagram showing a side of the exterior body 12. FIG. 2B is a perspective diagram showing the exterior body 12 viewed obliquely from above at side. FIG. 3 is a diagram showing openings provided on the exterior body 12 of the lure 10.

The exterior body 12 constitutes an outer surface of the lure 10. The exterior body 12 is hollow inside. In other words, the exterior body 12 is formed from the flexible material into a hollow shape. The exterior body 12 is formed in a shape imitating the surface shape of the bait fish. That is, the exterior body 12 is an imitation body imitating a surface skin (fish skin) of the bait fish, and is, for example, an artificial fish skin (artificial surface skin). Accordingly, as shown in FIG. 2A and FIG. 2B, the surface of the exterior body 12 has such patterns as a head portion 21, a pectoral fin 22, a pelvic fin 23, an anal fin 24, a tail fin 25, a fisheye 26, scales, a pattern of the surface skin (not shown), and a dorsal fin (not shown) similar to those of a real bait fish.

In the present embodiment, the flexible material constituting the exterior body 12 is a thin, light fabric (cloth, textile) made of natural or artificial fiber. A design imitating the surface shape and pattern of the bait fish is printed on the surface of the fabric.

Although the flexible material constituting the exterior body 12 is exemplified by the fabric, the flexible material is not limited to the fabric. The flexible material may be any thin, sheet-like and flexible material such as a relatively thin cloth, textile, raw fabric, gauze, nonwoven fabric, or film (e.g. a polymer component such as synthetic resin formed in a thin, membrane-like form). In addition, the flexible material is preferably a sheet-like member that is flexible enough to swing upon receiving a water flow or water pressure underwater. The flexible material may be a thin sheet made of resin.

The exterior body 12 is manufactured by: scanning both sides of a specific bait fish (a real one) into image data; printing onto the fabric an image of the sides of the bait fish by using the image data; cutting, out of the fabric, pieces having the same size as respective parts of the real bait fish; and jointing joint allowances at edges of the cut fabric pieces (hereinafter referred to as "fish body sheets") one another. This makes it possible to produce a three-dimensional exterior body 12 having the same size as the real bait fish and having a similar design to the real bait fish. The fish body sheets can by jointed to each other by various types of joint means such as sewing, adhesion by adhesive, and resin welding.

It is noted that the exterior body 12 may be manufactured by cutting the printed fabric three-dimensionally (three-dimensional cutting) while directly applying the fabric onto the real bait fish, and jointing the cut parts to each other. Alternatively, the printed fabric may be cut flatly (flat cutting) into pieces, and then processing such as tack, pleat, or dart (all are sewing terms) may be applied to the cut pieces for the exterior body 12 to be finished in a three-dimensional shape.

In the present embodiment, as shown in FIG. 3, a plurality of openings 31, 32, and 33 are formed on the exterior body 12. The opening 31 is an example of a takeout port of the present disclosure. The opening 32 is an example of an inflow portion of the present disclosure, and is an example of a front-side opening of the present disclosure. The opening 33 is an example of an outflow portion of the present disclosure, and is an example of a rear-side opening of the present disclosure.

The opening 31 is formed on an upper portion of the exterior body 12. The opening 31 is formed on the head portion 21 side of the upper portion of the exterior body 12. Specifically, the opening 31 extends from a little away from a front edge 120 of the exterior body 12 to a position in front of the dorsal fin (not shown) of the exterior body 12. The opening 31 is formed by not jointing a part of the upper portion of the exterior body 12.

The opening 31 is used for storing the core body 11 into a hollow portion (space) inside the exterior body 12 and taking out the core body 11 from the exterior body 12. Accordingly, the opening 31 is formed to be large enough to insert the core body 11.

A hook and loop fastener 35 is provided at an outer periphery edge of the opening 31 so that the opening 31 can be kept closed. The hook and loop fastener 35 includes a hook sheet and a loop sheet, wherein the hook sheet includes a plurality of minute hooks, the loop sheet includes a plurality of minute loops, and the opening 31 is closed when these sheets are jointed together. In addition, the opening 31 is opened when the joint of the hook sheet and the loop sheet is released by separating them from each other.

It is noted that the hook and loop fastener 35 is merely an example of an opening/closing mechanism (opening/closing means) for opening and closing the opening 31. The opening/closing mechanism may be, for example, a point fastener referred to as a snap button or a dot button, or a slide type line fastener (slide fastener).

In addition, the opening/closing mechanism for openably closing the opening 31 may be realized by a structure where the hook sheet is attached to an upper surface of the core body 11 stored inside the exterior body 12, the loop sheet is attached to the outer peripheral edge of the opening 31, and the hook and loop fastener 35 is closed by jointing these sheets.

A part of the opening 31 may be kept open without being closed by the opening/closing mechanism. In this case, the opening 31 plays a role of an inlet portion for taking water into the exterior body 12 during retrieving of the lure 10.

The opening 32 is formed at a front edge portion of the exterior body 12. The opening 32 is formed at a front edge of the head portion 21 of the exterior body 12. The opening 32 can be formed by not jointing the front edge portion of the head portion 21 of the exterior body 12. With the opening 32 formed at the front edge of the head portion 21, when the lure 10 is retrieved underwater or on the water surface, water from the front is taken from the opening 32 into the exterior body 12.

It is noted that the location of the opening 32 is not limited to the front edge of the head portion 21. The opening 32 may be formed at any position on the exterior body 12 as far as water from the front can be taken from it into the exterior body 12 and passed through the exterior body 12 to the opening 33 that is described below. At least the opening 32 is formed more on the front side on the exterior body 12 than the opening 33 that is described below.

In addition, the number of the opening 32 is not limited to one, but a plurality of openings 32 may be formed on the exterior body 12. For example, a plurality of openings 32 separated from each other in an up/down direction or left/right direction may be formed at the front edge portion of the head portion 21. In addition, the front edge portion of the head portion 21 may be closed, and the opening 32 may be formed on either side of the head portion 21. In addition, the opening 32 may be formed on an upper portion or a lower portion of the head portion 21.

The opening 33 is formed at a rear edge portion of the exterior body 12. The opening 33 is formed at a rear edge of the tail fin 25 of the exterior body 12. The opening 33 can be formed by not jointing the rear edge of the tail fin 25 of the exterior body 12. With the opening 33 formed at the rear edge of the tail fin 25, when the lure 10 is retrieved underwater or on the water surface, water taken in from the opening 32 flows out from the opening 33 to outside of the exterior body 12.

It is noted that the location of the opening 33 is not limited to the rear edge of the tail fin 25. The opening 33 may be formed on either side of the tail fin 25 or at any position on the surface of the tail portion 121 as far as water that has flowed into the exterior body 12 from the opening 32 can be released to outside of the exterior body 12 from the opening 33. In addition, the opening 33 may be formed at both or one of the upper edge and the lower edge of the tail fin 25. In addition, the opening 33 may be formed on a part of the tail fin 25 extending from the upper edge to the lower edge via the rear edge. That is, the opening 33 may be formed at any position on the exterior body 12 as far as the water that has flowed in from the opening 32 can be released to outside of the exterior body 12 from the opening 33.

In addition, the number of the opening 33 is not limited to one, but a plurality of openings 33 may be formed. For example, a plurality of openings 33 separated from each other in the up/down direction may be formed at the rear edge portion of the tail fin 25. In addition, the rear edge portion of the tail fin 25 may be closed, and the opening 33 may be formed on either side of the tail fin 25. In addition, the opening 33 may be formed on an upper portion or a lower portion of the tail fin 25. At least the opening 33 may be formed more on the rear side on the exterior body 12 than the opening 32. In addition, preferably the opening 33 may be formed more on the rear side than the rear edge portion 431 of the core body 11.

The fisheye 26 is formed on either side of the head portion 21. The fisheye 26 consists of a fastening tool fixed to the fabric. The fastening tool is what is called a plastic hook. The fastening tool is a hook member that is circulated in markets for the purpose of engaging overlap parts of a shirt or trousers to each other, and is composed of a male hook body and a hook head portion, wherein the male hook body is disposed inside the exterior body 12 and the hook head portion is disposed on the surface side of the exterior body 12. The hook head portion is provided with a caulk pin. In a state where the male hook body is disposed on a reverse surface of the exterior body 12 and the hook head portion is disposed on a front surface thereof, caulking processing is performed to press them against each other. This allows the male hook body and the hook head portion to be attached to the fabric of the exterior body 12. In the present embodiment, a pattern of an eye of fish is drawn on the hook head portion that appears on the front surface of the exterior body 12.

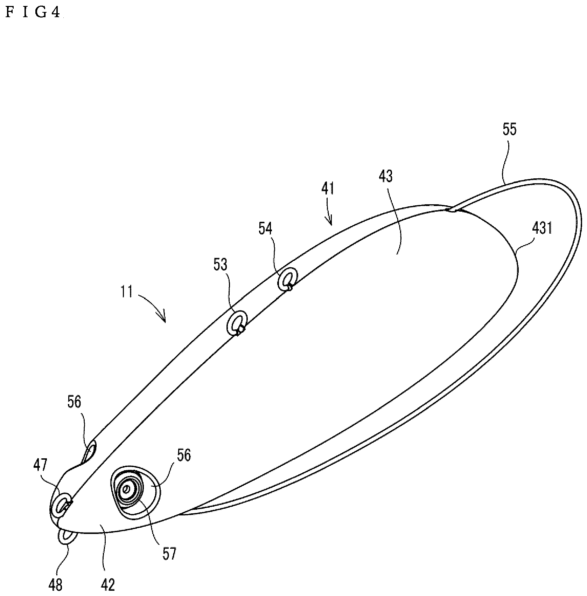

In a state (the state shown in FIG. 1) where the core body 11 is stored to the inside of the exterior body 12, a part of the exterior body 12 and the core body 11 are engaged to each other. This allows the exterior body 12 to be attached to the core body 11. In the present embodiment, the male hook bodies (not shown) of the two fisheyes 26 are engaged to female hook bodies 57 (see FIG. 4) provided on the core body 11, the female hook bodies 57 described below. There is no part of the exterior body 12 that is fixed to the core body 11 other than the part that is engaged to the female hook bodies 57. It is noted that the fastening tool and the female hook bodies 57 are an example of an engaging portion of the present disclosure.

It is noted that the engaging portion that engages the core body 11 to a part of the exterior body 12 is not limited to the engaging mechanism composed of the male hook body and the female hook body 57. For example, the surface of the core body 11 and the surface of the exterior body 12 may be partially engaged to each other by a hook and loop fastener or the like.

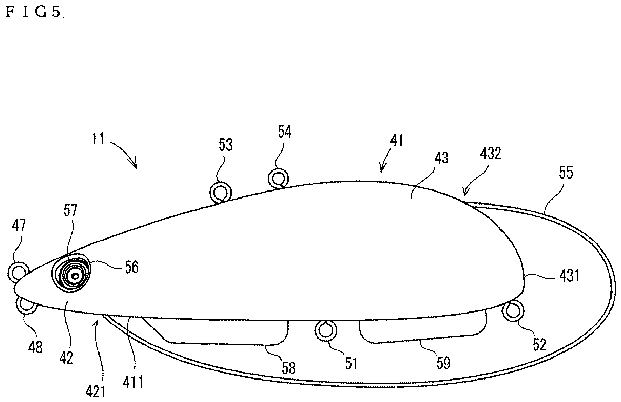

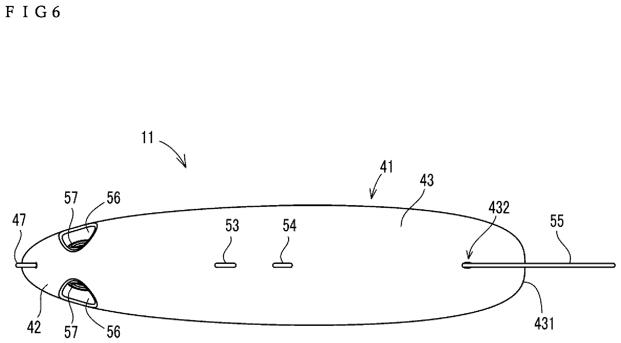

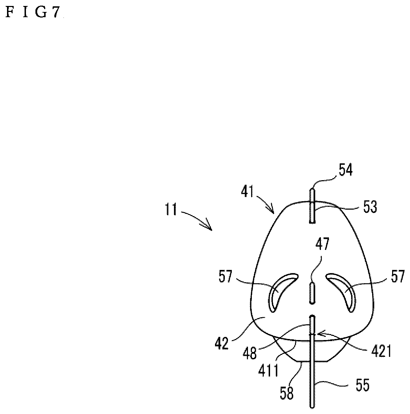

FIG. 4 to FIG. 7 are diagrams showing the core body 11 of the lure 10. FIG. 4 is a perspective diagram of the core body 11. FIG. 5 is a side diagram of the core body 11. FIG. 6 is a top diagram of the core body 11.

As shown in FIG. 1, the core body 11 is disposed inside the lure 10, and is provided in a hollow portion inside the exterior body 12.

As shown in FIG. 4, the core body 11 includes a main body portion 41 elongated in a longitudinal direction (the front/rear direction) of the lure 10. The main body portion 41 is formed from a hard resin material such as ABS resin. The main body portion 41 includes a bottom surface 411 (see FIG. 5) formed in an appropriately flat shape. In addition, as shown in FIG. 5, the main body portion 41 is formed such that a rear portion 43 on the rear side has a higher height from the bottom surface 411 than a front portion 42 on the front side. That is, the main body portion 41 is formed in such a shape that the rear portion 43 is more expanded than the front portion 42 in the height direction and the width direction. In addition, the main body portion 41 is formed to be tapered toward the front as a whole.

It is noted that the main body portion 41 is not limited to being formed from the hard resin material. For example, the main body portion 41 may be formed from wood, metal, soft resin material such as silicon or elastomer, or rubber. Here, since the exterior body 12 is formed from a thin fabric and is extremely light in weight, the total weight of the lure 10 is substantially decided according to the weight of the main body portion 41. To prevent the main body portion 41 from becoming excessively heavy in weight, the main body portion 41 is formed to be hollow inside when it is made of a metal. In addition, when the main body portion 41 is made of a soft resin material, it is preferable that a metal wire for attaching eyelets 47 and 48 or the like that are described below is embedded in the main body portion 41 so that the eyelets 47 and 48 or the like can be attached to the main body portion 41.

The core body 11 is provided with sinkers 58 and 59. The sinkers 58 and 59 are attached to the bottom surface 411 of the main body portion 41. The sinkers 58 and 59 may be detachably attached to the bottom surface 411 so as to be replaceable. In addition, the sinkers 58 and 59 may be embedded in the main body portion 41.

A front edge portion of the front portion 42 is formed in a tapered shape so that it can be exposed to outside from the opening 32 of the exterior body 12. In a state where the male hook bodies of the fisheyes 26 of the exterior body 12 are attached to the core body 11, a part of the front edge portion of the front portion 42 is exposed to outside from the opening 32. That is, in a state where a part of the front edge portion of the front portion 42 is exposed to outside from the opening 32, the exterior body 12 is attached to the core body 11.

The eyelets 47 and 48 are provided at the front edge portion of the front portion 42. The eyelets 47 and 48 are fixed to the front portion 42. As shown in FIG. 1, in a state where the exterior body 12 is attached to the core body 11, the eyelets 47 and 48 are exposed to outside from the opening 32.

The eyelets 47 and 48 are parts to which a line pulled out from a rod is locked directly or indirectly via a swivel or snap. The eyelet 47 is attached to an upper side of the front edge portion of the front portion 42, and the eyelet 48 is attached to a lower side of the front edge portion of the front portion 42.

It is noted that when the eyelet 47 is used for connecting a line, a hook may be attached to the eyelet 48. In addition, when the eyelet 48 is used for connecting a line, a hook may be attached to the eyelet 47.

As shown in FIG. 5, eyelets 51 and 52 are provided at the bottom surface 411 of the core body 11. The eyelets 51 and 52 are fixed to the bottom surface 411 of the core body 11. The eyelets 51 and 52 are disposed separated from each other by a predetermined distance in the front/rear direction. The eyelets 51 and 52 may be used for attaching a hook, or for attaching a sinker.

In addition, eyelets 53 and 54 are provided at an upper portion of the core body 11. The eyelets 53 and 54 are fixed to an upper edge portion of the core body 11. The eyelets 53 and 54 are arranged at a position corresponding to the opening 31. In a state where the exterior body 12 is attached to the core body 11, the eyelets 53 and 54 are exposed to outside from the opening 31. A hook may be attached to the eyelets 53 and 54.

A recessed portion 56 is formed on either side of the front portion 42. A female hook body 57 is fixed to an inner part of each of the recessed portions 56. The female hook body 57 is fixed to the recessed portion 56 by, for example, adhesive or a pin. The male hook bodies (not shown) of the exterior body 12 are engaged to the female hook bodies 57, and thereby the exterior body 12 is attached to the core body 11.

The core body 11 includes a holding member 55. The holding member 55 is provided to hold the attitude of the exterior body 12, especially the attitude of the tail portion 121 of the exterior body 12, underwater. The holding member 55 is a linear member such as a wire. The holding member 55 is, for example, a metal wire, resin wire, nylon gut, or wire formed from a material having appropriate elasticity. One end of the holding member 55 is fixed to a part 421 on a front side of the bottom surface 411, and the other end is fixed to a part 432 on an upper side of the rear edge portion 431. It is noted that the part 421 is located on the bottom surface 411 at a center in a width direction of the core body 11, and the part 432 is located on the rear edge portion 431 at a center in the width direction.

In the present embodiment, the holding member 55 extends from the part 421 to the part 432 in such a way as to form a loop with the surface of the core body 11 (the bottom surface 411 and a surface of the rear edge portion 431). Specifically, the holding member 55 is set to extend diagonally rearward from the part 421 and then extend rearward below the bottom surface 411 and further extend to the rear of the rear edge portion 431 and be bent upward and then folded frontward to reach the part 432 of the rear edge portion 431.

With the above-described configuration of the holding member 55, as shown in FIG. 1, in a state (the state shown in FIG. 1) where the core body 11 is stored to the inside of the exterior body 12 and the exterior body 12 is attached to the core body 11, the holding member 55 is disposed in a space 61 between the bottom surface 411 and the lower portion of the exterior body 12, and disposed in a space 62 between the rear edge portion 431 and the tail portion 121. In other words, the holding member 55 extends from the core body 11 toward a space between the inner surface of the exterior body 12 and the surface of the core body 11.

It is noted that although the present embodiment discloses as one example a configuration where one holding member 55 is provided at the core body 11, a plurality of holding members 55 may be provided in such a way as to extend in the front/rear direction of the core body 11.

In addition, although the present embodiment discloses a linear member such as a wire, as one example of the holding member 55. However, the holding member 55 may be, for example, an elastic plate or a coil spring that extends from the part 421 to the part 432. In addition, not limited to one forming a loop from the part 421 to the part 432, the holding member 55 may be a linear member, plate member, or coil member that extends straight from the rear edge portion 431 rearward and is elastic in the up/down and left/right directions.

As described above, the lure 10 of the present embodiment includes: the core body 11 stored to the inside of the exterior body 12; and the exterior body 12 attached to the core body 11 and including the tail portion 121 that extends more rearward than the rear edge portion 431 of the core body 11. With this configuration, the exterior body 12 swings irregularly in response to even a slight water flow or slight movement of water that occurs around the lure 10 underwater. In addition, the exterior body 12, especially the tail portion 121 of the exterior body 12, moves irregularly and smoothly like a living bait fish in response to a water flow, water pressure or movement of water that occurs during a retrieve of the lure 10. In addition, the angler may stop the action of the lure 10 temporarily during retrieve of the lure 10 to lure the target fish into biting the lure 10. In that case, the tail portion 121 of the stopped lure 10 moves in a swinging motion in response to a slight water flow or slight movement of water that occurs around the lure 10 when the lure 10 is stopped. With such a motion of the exterior body 12, it is possible for the lure 10 to realize a realistic movement of the bait fish.

In addition, when the exterior body 12 of the lure 10 is formed to the same size as a conventional large-size lure called a big bait, the exterior body 12 is extremely lighter in weight than the conventional big bait.

In addition, when the lure 10 is cast, it flies with the tail portion 121 of the exterior body 12 folded toward the core body 11, thereby suppressing the air resistance significantly during the flight compared to the conventional big bait. Accordingly, it is possible to increase the flight distance compared to the conventional big bait and cast the lure 10 more easily to an aimed position.

In addition, since the exterior body 12 is provided with the opening 31, it is possible to remove the exterior body 12 from the core body 11 and attach another exterior body of a different surface design to the core body 11. This substantially allows the lure 10 to be changed to a lure of a different form. In addition, since, as described above, the exterior body 12 is formed from a thin sheet member such as a fabric, even when a plurality of exterior bodies 12 of different designs are held, it is not bulky. This substantially allows holding a large number of lures 10.

In addition, the exterior body 12 is configured to be attached to the core body 11 in a detachable manner. With this configuration, it is possible to realize various types of lures 10 by preparing a plurality of exterior bodies 12 that differ in design or size and allowing the angler to select, from the plurality of exterior body 12, an exterior body 12 to be attached to the core body 11 based on his/her taste, the fishing spot environment, type of the target fish, or the like. In addition, even in a case where the sinkers 58 and 59 are attached to the lower portion of the core body 11 as a retrofit, since the core body 11 is covered and hidden with the exterior body 12, the sinkers 58 and 59 do not affect the outer appearance and design of the lure 10.

In addition, when the exterior body 12 is deteriorated by use of the lure 10, it is possible to realize a substantially new lure 10 by replacing only the exterior body 12.

In addition, since the exterior body 12 is attached to the core body 11 in a detachable manner, the angler can replace the exterior body 12 of the lure 10 with another exterior body 12 of a different design without removing the line and the core body 11. As a result, compared to the conventional lure, the lure 10 can be changed to another one easily.

In addition, the exterior body 12 that is changeable or replaceable with respect to the core body 11 is a fishing item that has not existed in conventional lures. It is accordingly thought that bringing the lure 10 of the present embodiment to market will contribute to stimulating the lure fishing industry and to development of the fishing gear industry,

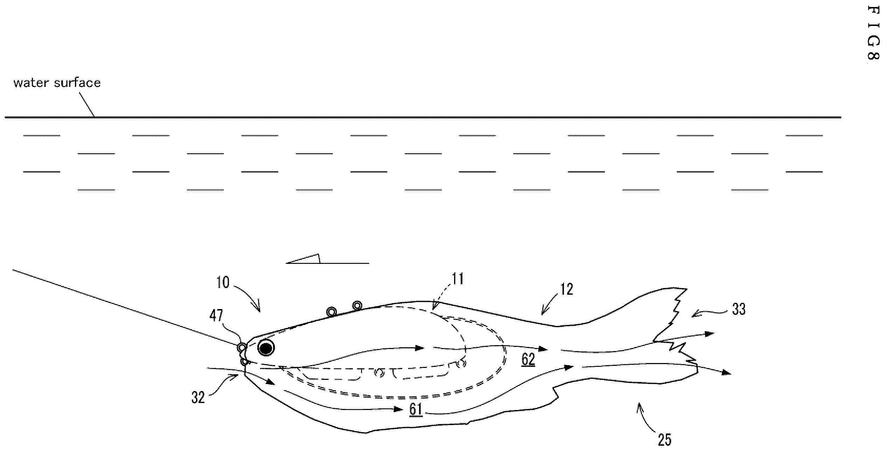

In addition, the lure 10 is provided with the openings 32 and 33, wherein when the lure 10 is retrieved, the opening 32 allows water from the front to be taken into a space within the exterior body 12, and the opening 33 allows the water taken into the space within the exterior body 12 to flow out to outside of the exterior body 12. With this configuration, as shown in FIG. 8, when the lure 10 is thrown into water and retrieved, water is taken from the opening 32 into the exterior body 12, and the water passes through the space between the core body 11 and the exterior body 12 and is released to outside from the opening 33. That is, a water flow flowing from the opening 32 toward the opening 33 occurs in the inner space of the exterior body 12. A force received by the inner surface of the exterior body 12 from the waterflow and a water pressure received by the outer surface of the exterior body 12 during retrieving cause the tail portion 121 to swing more irregularly. In addition, immediately after the lure 10 is stopped, a power of the water flow remains in the exterior body 12, and by receiving the force of the water flow from the inside, the tail portion 121 moves differently from during retrieving. As a result, it is possible with the lure 10 to realize a realistic movement of the bait fish.

In addition, with the opening 31 formed on the lure 10, it is easy to detach the exterior body 12 from the core body 11 and it is easy to attach the exterior body 12 to the core body 11.

In addition, the exterior body 12 is attached to the female hook body of the core body 11 only by the male hook body of the fisheye 26. This increases the degree of freedom of the motion of the exterior body 12 with respect to the core body 11, making more conspicuous the swinging motion of the exterior body 12 underwater.

In addition, with the above-described holding member 55 provided in the holding member 55, even when a strong water pressure or water flow is applied to the lure 10 horizontally, the holding member 55 prevents the tail portion 121 from being bent excessively. In this way, the holding member 55 can maintain the attitude of the tail portion 121 similar to that of the bait fish moving underwater.

It is noted that as described above, the opening/closing mechanism for openably closing the opening 31 may be realized by a configuration where the hook sheet is attached to the upper surface of the core body 11 stored to the inside of the exterior body 12, while the loop sheet is attached to the outer peripheral edge of the opening 31, and the hook and loop fastener 35 is closed by jointing these sheets together. In this case, the degree of freedom of the motion of the exterior body 12 is limited to a part located lower than the bottom surface 411 of the core body 11, and to the tail portion 121. However, in the exterior body 12, since the upper portion of the core body 11 is fixed to the inner surface of the upper portion of the exterior body 12, the attitude of the lure 10 underwater is stabilized and the motion of the lure 10 during retrieving comes to resemble the movement of a living bait fish underwater.

In addition, the above-described embodiment discloses as one example a configuration where the opening 33 is formed at the rear edge portion of the exterior body 12. However, the present disclosure is not limited to the configuration. For example, the opening 33 may not be formed at the rear edge portion of the exterior body 12, and one or more holes may be formed on the outer surface of the tail portion 121. The holes may be a plurality of minute holes formed on the outer surface of the tail portion 121 by a hole-creating process. In addition, when the material of the tail portion 121 is a mesh material, air holes of the mesh material may be used as the holes. Of course, even in a case where a plurality of holes are formed on the outer peripheral surface of the tail portion 121, the opening 33 is preferably formed at the rear edge portion of the exterior body 12 in order for the tail fin 25 to make a realistic movement in response to the water flow.

In addition, the above-described embodiment explains about an example in which an image of a bait fish is printed on the surface of the exterior body 12. However, the design that appears on the surface of the exterior body 12 is not limited to the bait fish. For example, as described above, the exterior body 12 may imitate shapes of various types of living things such as squid, shrimp, crab, frog, tadpole, lizard, and worm. For example, when the exterior body 12 imitates the shape of a squid, the tail portion 121 represents legs of the squid. When the exterior body 12 imitates the shape of a shrimp, the tail portion 121 represents a part of the shrimp extending from a center of the trunk to the tail. When the exterior body 12 imitates the shape of a crab, the tail portion 121 represents legs of the crab. When the exterior body 12 imitates the shape of a frog, tadpole, lizard, or worm, the tail portion 121 represents hind legs of the frog, the tail of the tadpole, the tail of the lizard, or the back half of the worm.

In addition, the above-described embodiment discloses an example in which a pattern of the surface skin of a bait fish as an example of a living thing is printed on the surface of the exterior body 12. However, the exterior body 12 is not limited to such a configuration. The exterior body 12 may be a product of: forming a head portion, a body portion, and a tail fin of a bait fish from the above-described flexible material; and attaching imitation parts artificially formed from synthetic resin or the like imitating parts such as a pectoral fin, pelvic fin, anal fin, and dorsal fin to the head portion, the body portion and the like. Of course, the exterior body 12 may be a product of forming a head portion and a body portion of a living thing different from fish from the above-described flexible material; and attaching imitation parts artificially formed imitating parts such as legs or a tail to the body portion and the like.

In addition, not limited to an artificial fish skin imitating a surface skin (fish skin) of a bait fish, the exterior body 12 may be a processed fish skin (processed surface skin) that is formed by processing the skin of a real fish (fish skin). That is, the flexible material forming the exterior body 12 may be the processed fish skin. For example, the processed fish skin is produced as follows: a fish skin is cut from a specific bait fish; the cut fish skin is subjected to a defatting process; the fish skin is subjected to a tanning process using a tannin or chrome product in order for the fish skin to be rotting-resistant and flexible and have an enhanced tensile strength; and a fish pattern is printed on the tanned fish skin. When the exterior body 12 imitating the surface shape of a bait fish is produced by using such a processed fish skin, the reality of the lure 10 is further enhanced. Of course, the flexible material may be a processed surface skin formed by processing the surface skin of a living thing other than fish.

### [Second embodiment]

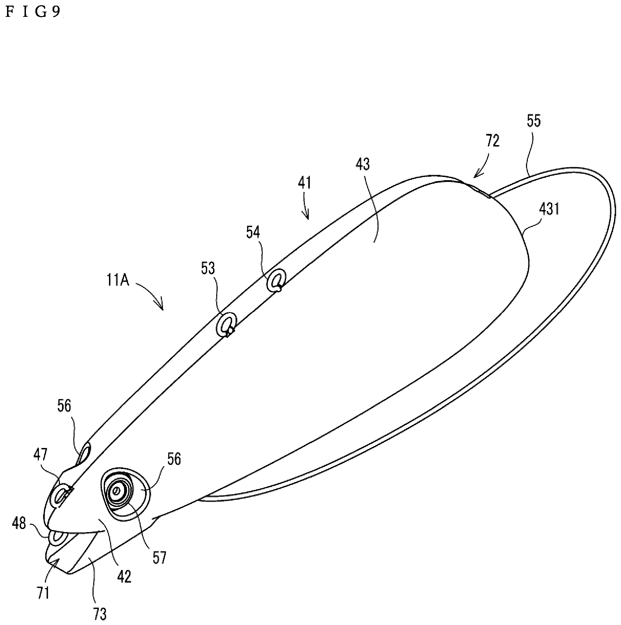

The following describes a fishing lure 10A (an example of the fishing lure of the present disclosure) according to a second embodiment of the present disclosure with reference to FIG. 9 to FIG. 13. It is noted that the fishing lure 10A (hereinafter merely referred to as "lure 10A") differs from the above-described configuration of the first embodiment in that an inner flow path 70 is formed in the core body 11, and the other parts are common to the configuration of the lure 10. Accordingly, in the following description, only the different part is explained, and with regard to the common parts, the reference signs used in the first embodiment are used and explanation thereof is omitted.

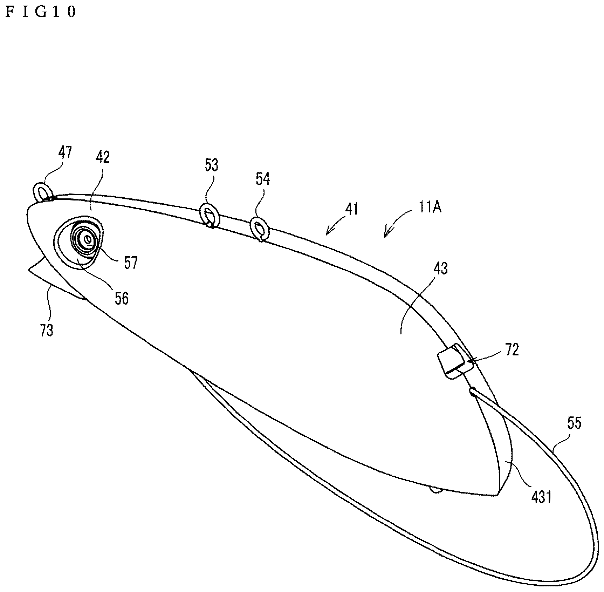

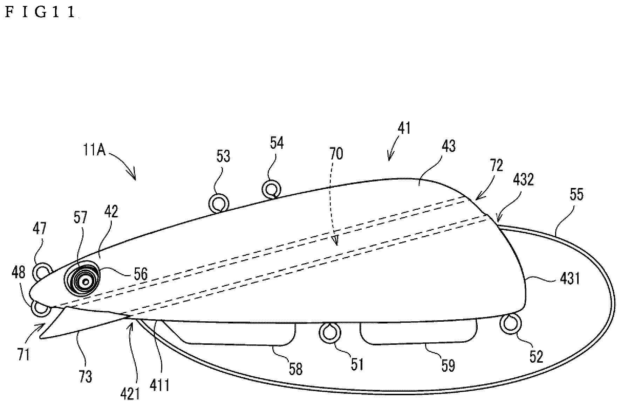

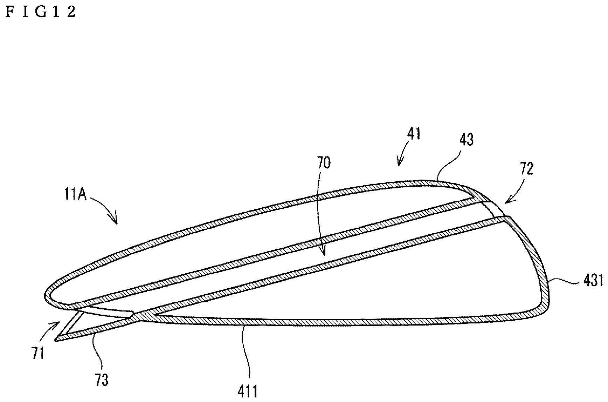

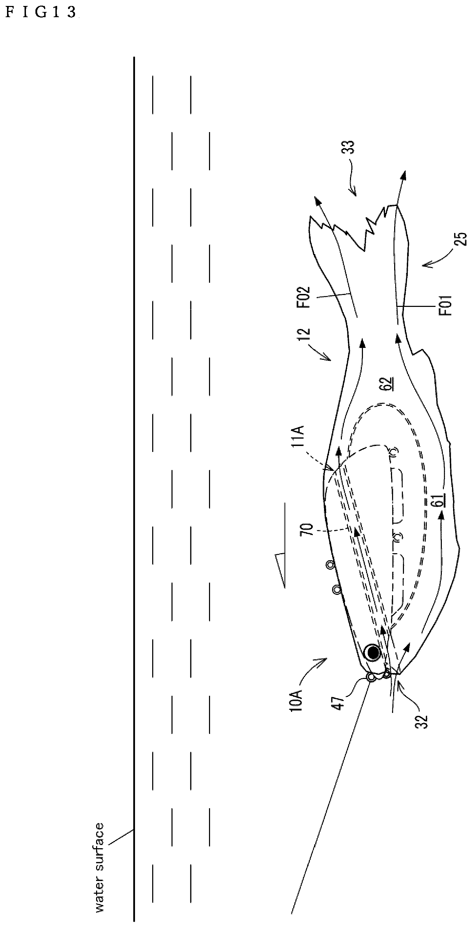

FIG. 9 is a front perspective diagram showing a core body 11A of the lure 10A according to the second embodiment of the present disclosure. FIG. 10 is a rear perspective diagram showing the core body 11A of the lure 10A. FIG. 11 is a side diagram of the core body 11A of the lure 10A. FIG. 12 is a cross section diagram of the core body 11A. In addition, FIG. 13 is a diagram showing a movement of the lure 10A underwater. It is noted that in FIG. 12, the eyelets, holding member 55, and sinkers 58 and 59 are omitted.

As shown in FIG. 9, a first opening 71 is formed on the front edge of the main body portion 41 of the core body 11A. In addition, as shown in FIG. 10, a second opening 72 is formed on the upper portion of the rear edge portion 431 of the main body portion 41. In addition, as shown in FIG. 11, the inner flow path 70 extending straight from the first opening 71 to the second opening 72 is formed in the main body portion 41. The inner flow path 70 extends straight from the first opening 71 diagonally upward toward the rear to reach the second opening 72.

In addition, a lip-shaped guide portion 73 for guiding the water flow from the front to the inner flow path 70 from the first opening 71 is provided at the lower edge portion of the first opening 71.

As shown in FIG. 8, the lure 10 of the first embodiment is formed such that when the lure 10 is thrown into water and is retrieved underwater, the front edge of the lure 10 is pulled diagonally upward by a line extending diagonally upward from the eyelet 47. In this case, since the front edge portion of the front portion 42 of the core body 11 is pulled upward at the opening 32, water enters inside mainly from a gap that is open at a lower side of the opening 32. In this case, the water that entered inside from the gap of the opening 32 mainly passes the space 61 between the bottom surface 411 and the lower portion of the exterior body 12 and flows to the opening 33 of the tail fin 25. Thus the water flow concentrates to the lower portion of the opening 33, and the water flow hardly occurs to the upper portion of the opening 33, causing the tail fin 25 to move differently between its lower portion and upper portion. Specifically, during retrieving, only the lower portion of the tail fin 25 moves strongly in a swinging motion, and the upper portion of the tail fin 25 moves weakly in a swinging motion.

In the present embodiment, the inner flow path 70 is provided in the core body 11A in order for the upper portion of the tail fin 25 to move more strongly in a swinging motion, or in order for the upper portion and the lower portion of the tail fin 25 to move as approximately strongly as each other. With this configuration, as shown in FIG. 13, when the lure 10A is thrown into water and is retrieved underwater, water enters the inside of the exterior body 12 from the gap at the lower side of the opening 32, and the water passes the space 61 between the bottom surface 411 and the exterior body 12 and flows out from the lower portion of the opening 33. That is, a water flow F01 occurs inside the exterior body 12, wherein the water flow F01 flows in from the opening 32, passes through the space 61, and flows out from the lower portion of the opening 33. In addition, a part of the water that has entered the inside of the exterior body 12 from the gap at the lower side of the opening 32 forms a water flow F02 that enters the inner flow path 70 from the first opening 71, passes through the inner flow path 70 and flows out of the core body 11A from the second opening 72, flows further rearward, and flows out from the upper portion of the opening 33. In this way, mainly two water flows F01 and F02 occur in the exterior body 12, thereby causing the upper portion of the tail fin 25 to swing more strongly during retrieving. In addition, the upper portion and the lower portion of the tail fin 25 move as approximately strongly as each other in a swinging motion.

It is noted that in the present embodiment, the number of the inner flow paths 70 is not limited to one. For example, a plurality of inner flow paths 70 may be provided in the main body portion 41. For example, two inner flow paths 70 extending in the front/rear direction may be arranged side by side in the main body portion 41.

In addition, although the inner flow path 70 has been exemplified by a flow path extending straight from the first opening 71 to the second opening 72, the inner flow path 70 may be formed to be curved or bent in the main body portion 41.

In addition, although as one example, a configuration has been presented where the first opening 71 is formed on the front edge of the main body portion 41 and the second opening 72 is formed on the upper portion of the rear edge portion 431, the positions of the first opening 71 and the second opening 72 constituting the inner flow path 70 are not limited to such positions. The first opening 71 may be formed on a side surface of the front part of the main body portion 41. In addition, the second opening 72 may be formed at any position that is in rear of and upper than the first opening 71 in the main body portion 41.

### [Third embodiment]

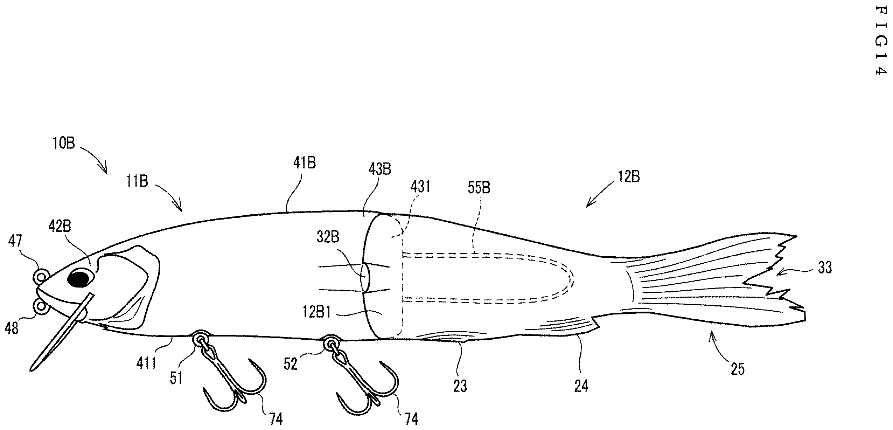

The following describes a fishing lure 10B (an example of the fishing lure of the present disclosure) according to a third embodiment of the present disclosure with reference to FIG. 14. It is noted that the following description only explains about a part of the fishing lure 10B (hereinafter merely referred to as "lure 10B") that is different from configurations of the embodiments described above. With regard to the common parts or parts having the same function or role, the reference signs used in the above-described embodiments are used and explanation thereof is omitted.

As shown in FIG. 14, the lure 10B includes: a front body portion 11B (an example of the core body of the present disclosure) that constitutes the front part of the main body of the lure 10B; and an exterior body 12B (an example of the swing member and the extension portion of the present disclosure) that is attached to the front body portion 11B.

As is the case with the exterior body 12 of the first embodiment, the exterior body 12B is formed from a sheet-like flexible material. The exterior body 12B is formed in approximately the same shape as the tail portion 121 of the exterior body 12. That is, the exterior body 12B has approximately the same configuration as a rear part of the exterior body 12 of the first embodiment including the pelvic fin 23. The exterior body 12B is common to the exterior body 12 of the first embodiment in that it is formed to be hollow inside and that the opening 33 is formed at the rear edge portion of the tail fin 25.

The front body portion 11B corresponds to the core body 11 of the first embodiment. The front body portion 11B includes a main body portion 41B elongated in a longitudinal direction (the front/rear direction) of the lure 10B. The main body portion 41B corresponds to the main body portion 41 of the first embodiment and is, as is the case with the main body portion 41, formed from a hard resin material such as ABS resin.

Different from the core body 11, the front body portion 11B is not covered with the exterior body 12B, and includes: a front portion 42B corresponding to the head portion of a real bait fish; and a rear portion 43B corresponding to the trunk of the bait fish. The rear portion 43B extends from the front portion 42B to approximately the half of the lure 10B. In the present embodiment, patterns of the fisheyes, gill, pectoral fin, scales, surface skin pattern, dorsal fin, or the like imitating a real bait fish are drawn on the surface of the front body portion 11B.

The eyelets 51 and 52 are provided at the bottom surface 411 of the front body portion 11B. A hook 74 is attached to each of the eyelets 51 and 52.

The exterior body 12B is attached to the front body portion 11B in a detachable manner. For example, a front edge portion 12B1 of the exterior body 12B and the rear edge portion 431 of the rear portion 43B are attached to each other in a detachable manner by a fastening tool such as the hook member or hook and loop fastener. In a state where the front edge portion 12B1 of the exterior body 12B is attached to the rear edge portion 431, a space is formed between the exterior body 12B and the rear edge portion 431 of the front body portion 11B, and the exterior body 12B extends rearward from the rear edge portion 431.

The front body portion 11B includes a holding member 55B. The holding member 55B is provided to hold the attitude of the exterior body 12B underwater. The holding member 55B is formed from the same material as that of the holding member 55 of the first embodiment, and has the same role. The holding member 55B extends rearward from the rear edge portion 431, and is attached to the rear edge portion 431 in such a way as to form a loop with the surface of the rear edge portion 431.

An opening 32B (an example of an inlet of the present disclosure) for allowing water from the front to flow into the exterior body 12B is formed between the front edge portion 12B1 of the exterior body 12B and the rear portion 43B of the front body portion 11B. The opening 32B is formed on either side of the front body portion 11B.

The lure 10B configured as described above allows the exterior body 12B to swing irregularly in response to even a slight water flow or slight movement of water that occurs around the lure 10B underwater. As a result, it is possible with the lure 10B to realize a realistic movement of the bait fish.

### [Fourth embodiment]

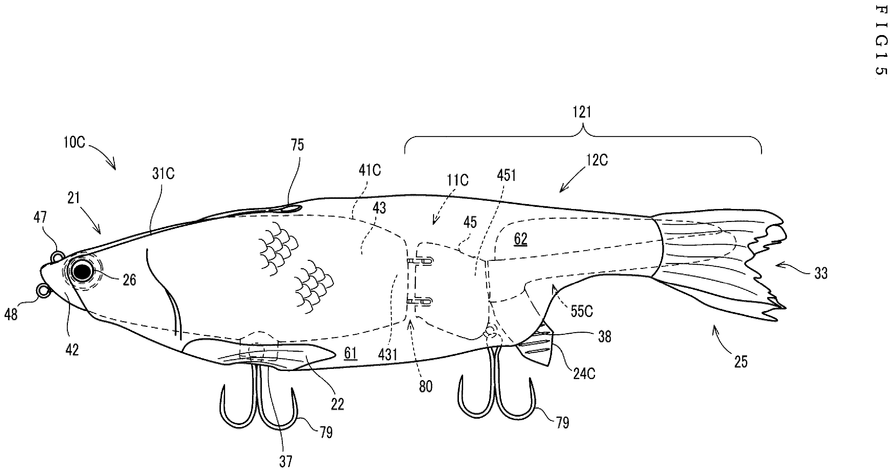

The following describes a fishing lure 10C (an example of the fishing lure of the present disclosure) according to a fourth embodiment of the present disclosure with reference to FIG. 15 to FIG. 20. It is noted that the following description only explains about a part of the fishing lure 10C (hereinafter merely referred to as "lure 10C") that is different from configurations of the embodiments described above. With regard to the common parts or parts having the same function or role, the reference signs used in the above-described embodiments are used and explanation thereof is omitted.

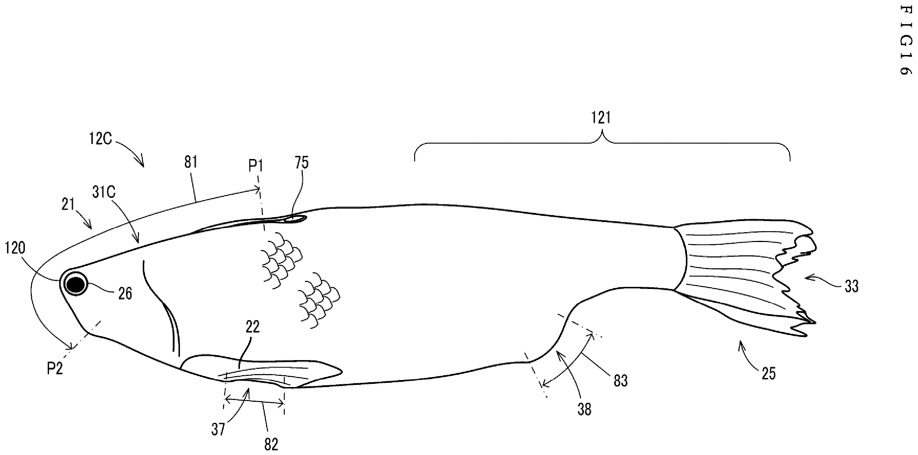

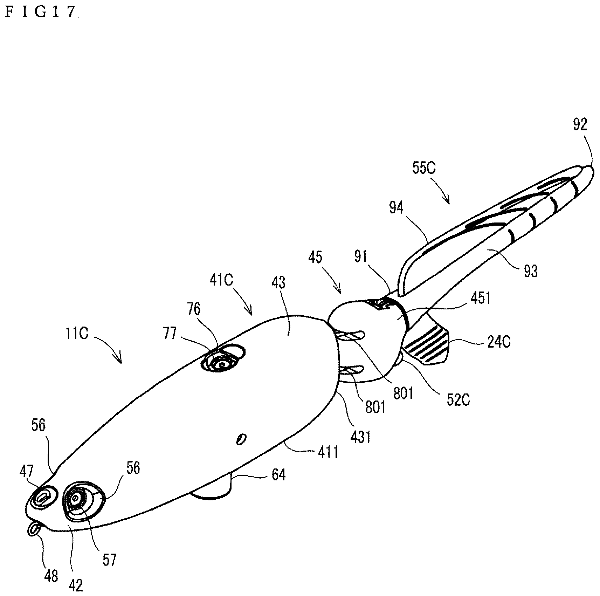

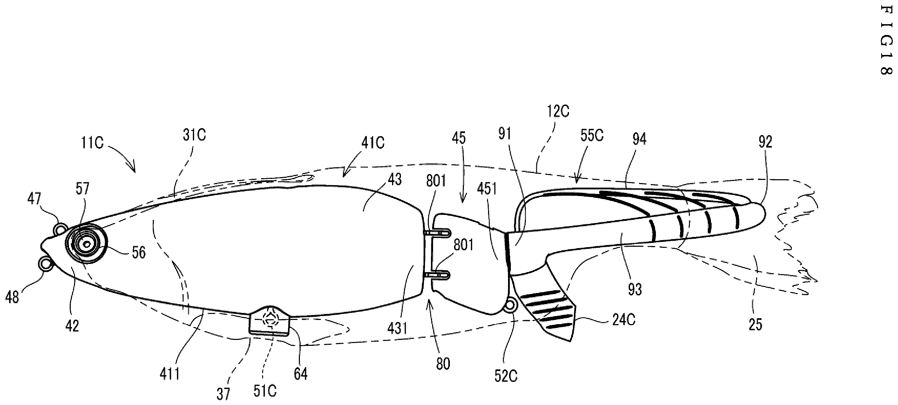

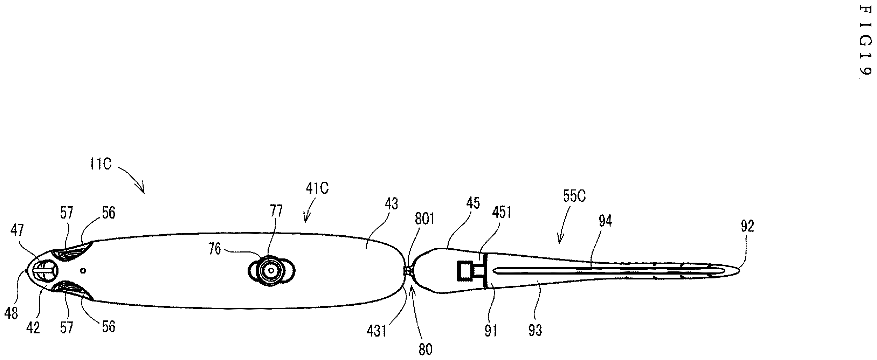

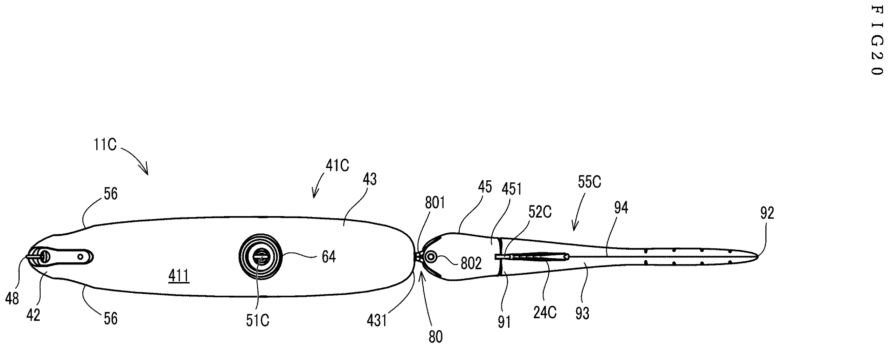

FIG. 15 is a side diagram showing the lure 10C according to the fourth embodiment of the present disclosure. FIG. 16 is a side diagram showing an exterior body 12C of the lure 10C. FIG. 17 is a perspective diagram showing a core body 11C of the lure 10C. FIG. 18 is a side diagram showing the core body 11C of the lure 10C. FIG. 19 is a top diagram showing the core body 11C of the lure 10C. FIG. 20 is a bottom diagram showing the core body 11C of the lure 10C.

The lure 10 mainly includes the core body 11C (an example of the core body of the present disclosure) and the exterior body 12C (an example of the swing member and the exterior member of the present disclosure).

The core body 11C is provided in the lure 10C and is a core part of the lure 10C. The core body 11C is formed from a hard resin material such as ABS resin.

The core body 11C has a two-division structure of being divided into a front part and a rear part, and includes a main body portion 41C disposed on the front side, and a rear body 45 (an example of a rear main body of the present disclosure) disposed on the rear side. The rear body 45 is connected to the rear edge portion 431 of the main body portion 41C by a connection portion 80 described below in such a way as to be able to swing in the left/right direction.

It is noted that although the present embodiment explains about an example where the core body 11C has the two-division structure, the core body 11C may have a structure of being divided into three or more parts in the front/rear direction, or may not have a division structure.

The exterior body 12C is attached to the core body 11C. In the present embodiment, the exterior body 12C is attached to the core body 11C in a detachable manner. The exterior body 12C is an exterior member that constitutes at least an outer surface (exterior surface) of the lure 10C. As is the case with the exterior body 12, the exterior body 12C is formed from the sheet-like flexible material. A part of a front-side portion of the exterior body 12C is attached to the main body portion 41C of the core body 11C in a detachable manner, and a part of an upper portion of the exterior body 12C is attached to the main body portion 41C of the core body 11C in a detachable manner.

In the present embodiment, the core body 11C is disposed in a hollow portion inside the exterior body 12C. As a result, in a state where the exterior body 12C is attached to the core body 11C, the tail portion 121 (an example of the extension portion of the present disclosure) that is from a vicinity of a center of the exterior body 12C in the front/rear direction to a rear edge portion of the exterior body 12C, extends out rearward from the rear edge portion 431 of the core body 11C and extends out rearward from a rear edge portion 451 of the rear body 45. With this configuration, when the lure 10C is thrown into water, a force that is caused when a rod action is applied, the water flow and water pressure underwater, or the like cause the exterior body 12B to move in an irregular swinging motion with respect to the core body 11C. In particular, the tail portion 121 of the exterior body 12C moves in an irregular swinging motion in response to a slight water flow or water pressure.

The exterior body 12C constitutes an outer surface part of the lure 10C. The exterior body 12C is hollow inside. In other words, the exterior body 12C is formed from the flexible material into a hollow shape. As shown in FIG. 16, the exterior body 12C is formed in a shape imitating the surface shape of the bait fish. That is, the exterior body 12C is an imitation body imitating a surface skin (fish skin) of the bait fish, and is, for example, an artificial fish skin (artificial surface skin).

As shown in FIG. 16, the exterior body 12C includes an opening 31C formed on the head portion 21 side. The opening 31C is an example of the takeout port of the present disclosure, and is an example of the inflow portion and the front opening of the present disclosure.

The opening 31C is formed on a part extending from a predetermined position P1 on an upper portion of the exterior body 12C to a position P2 at a lower side of the front edge portion of the head portion 21 via the front edge 120 of the head portion 21 (see an arrow 81 in FIG. 16). The position P1 is, for example, approximately in front of a dorsal fin (not shown) of the exterior body 12C. The position P2 is, for example, below the fisheye 26.

The opening 31C is used for storing the core body 11C into a hollow portion (space) inside the exterior body 12C, and taking out the core body 11C from the inside of the exterior body 12C. Accordingly, the opening 31C is formed to be large enough to insert the core body 11C. In addition, the opening 31C plays a role of an inlet portion for taking water into the exterior body 12C during retrieving of the lure 10C.

The upper portion of the exterior body 12C is provided with a fastening tool 75 for fixing the exterior body 12C to the core body 11C in a detachable manner. The fastening tool 75 is provided at a position slightly in rear of a rear edge portion (the portion at the position P1) of the upper portion of the opening 31C. The fastening tool 75 is the hook member such as what is called a plastic hook.

In a state (the state shown in FIG. 15) where the core body 11C is stored to the inside of the exterior body 12C, a part of the exterior body 12C and the core body 11C are engaged to each other by the fastening tool 75. In the present embodiment, a male hook body provided on the fastening tool 75 is engaged to a female hook body 77 (see FIG. 17) provided on the core body 11C, wherein the female hook body 77 is described below. It is noted that the fastening tool 75 and the female hook body 77 are an example of the engaging portion of the present disclosure.

The fisheye 26 is formed on either side of the head portion 21. The fisheye 26 is provided in the vicinity of the front edge 120 of the head portion 21. The fisheye 26 is the fastening tool fixed to the fabric constituting the exterior body 12C. That is, the fisheye 26 is a fastening tool for fixing the exterior body 12C to the core body 11C in a detachable manner. The fisheye 26 is the hook member such as what is called a plastic hook. In the present embodiment, a pattern of an eye of fish is drawn on the hook head portion that appears on the surface of the exterior body 12C.

In a state (the state shown in FIG. 15) where the core body 11C is stored to the inside of the exterior body 12C, a part of the exterior body 12C and the core body 11C are engaged to each other by the fisheye 26 (fastening tool). This allows the exterior body 12C to be attached to the core body 11C. In the present embodiment, the male hook bodies (not shown) provided on the two fisheyes 26 are engaged to the female hook bodies 57 (see FIG. 17) provided on the core body 11C. It is noted that the fisheye 26 as the fastening tool and the female hook body 57 are an example of the engaging portion of the present disclosure.

In the present embodiment, parts of the exterior body 12C that are fixed to the core body 11C are only the parts fixed by the two fisheyes 26 and the fastening tool 75, and there is no other part where the exterior body 12C is fixed to the core body 11C. Accordingly, when the lure 10C is retrieved underwater or on the water surface, water from the front is taken from the opening 31A into the exterior body 12C.

It is noted that an opening other than the opening 31C may be provided to allow water to flow into the exterior body 12.

As shown in FIG. 16, the exterior body 12C includes the opening 33 formed at a rear edge portion thereof. The opening 33 is formed at a rear edge of the tail fin 25 of the exterior body 12C. The opening 33 can be formed by not jointing the rear edge portion of the tail fin 25 of the exterior body 12C. With the opening 33 formed at the rear edge of the tail fin 25, when the lure 10C is retrieved underwater or on the water surface, the water taken in from the opening 31C flows out of the exterior body 12C from the opening 33.

It is noted that the location of the opening 33 is not limited to the rear edge of the tail fin 25, and the number of the opening 33 is not limited to one.

Insertion holes 37 and 38 are formed on the lower portion of the exterior body 12C in such a way as to pass through the exterior body 12C.

The insertion hole 37 is an opening for allowing a hook guide 64 provided on the core body 11C to be inserted therein such that a lower edge portion of the hook guide 64 is exposed to outside, the hook guide 64 described below. The insertion hole 37 is formed in the vicinity of the pectoral fin 22 (see an arrow 82 in FIG. 16) on the lower portion of the exterior body 12C.

The insertion hole 38 is an opening for allowing an anal fin 24C provided on the core body 11C to be inserted therein such that the anal fin 24C is exposed to outside. The insertion hole 38 is formed on the lower portion of the exterior body 12C at a position corresponding to the anal fin of the real bait fish (see an arrow 83 in FIG. 16).

As shown in FIG. 15, the core body 11C is disposed inside the lure 10C, and is provided in a hollow portion inside the exterior body 12C.

As shown in FIG. 17, the core body 11C includes the main body portion 41C and the rear body 45, wherein the rear body 45 is connected to the rear edge portion 431 of the main body portion 41C in such a way as to be able to swing in the left/right direction.

The main body portion 41C includes the bottom surface 411 formed in an appropriately flat shape. In addition, the main body portion 41C is formed such that the rear portion 43 on the rear side has a higher height from the bottom surface 411 than the front portion 42 on the front side. That is, the main body portion 41C is formed in such a shape that the rear portion 43 is more expanded than the front portion 42 in the height direction and the width direction. In addition, the main body portion 41C is formed to be tapered toward the front as a whole. A sinker is provided inside the main body portion 41C.

The front edge portion of the front portion 42 is formed in a tapered shape so that it can be exposed to outside from the opening 31C of the exterior body 12C. In a state where the male hook bodies of the fisheyes 26 of the exterior body 12C are attached to the main body portion 41C of the core body 11C, a part of the front edge portion of the front portion 42 is exposed to outside from the opening 31C. That is, in a state where a part of the front edge portion of the front portion 42 is exposed to outside from the opening 31C, the exterior body 12C is attached to the main body portion 41C. In this case, the eyelets 47 and 48 provided on the front edge portion of the front portion 42 are also exposed to outside from the opening 31C.

The recessed portion 56 is formed on either side of the front portion 42. The female hook body 57 is fixed to an inner part of each of the recessed portions 56. The male hook bodies (not shown) of the fisheyes 26 of the exterior body 12C are engaged to the female hook bodies 57. This allows a part of the exterior body 12C to be attached to sides of the main body portion 41C.

A recessed portion 76 is formed on the upper portion of the main body portion 41C. A female hook body 77 is fixed to an inner part of the recessed portion 76. The male hook body (not shown) of the fastening tool 75 of the exterior body 12C is engaged to the female hook body 77. This allows a part of the exterior body 12C to be attached to the upper portion of the main body portion 41C.

An eyelet 51C for attaching a hook is provided on the bottom surface 411 of the main body portion 41C. The hook guide 64 is provided to surround the eyelet 51C. The hook guide 64 is a cylindrical member formed from a soft resin material such as silicon, elastomer, or rubber. A circular recessed portion is formed in the periphery of the eyelet 51C, and the hook guide 64 is fit in the recessed portion. It is noted that the hook guide 64 may be formed integral with the main body portion 41C.

With such a hook guide, when a double hook 79 is attached to the eyelet 51C after the core body 11C is attached to the inside of the exterior body 12C, it becomes harder for the double hook 79 to be caught on the exterior body 12C.

As shown in FIG. 18, the rear body 45 is connected to the rear edge portion 431 of the main body portion 41C by the connection portion 80. The connection portion 80 includes: two annular connection rings 801 fixed to the rear edge portion 431 of the main body portion 41C; and a support shaft 802 (see FIG. 20) provided at the front edge portion of the rear body 45. The two connection rings 801 are disposed separated from each other in the up/down direction, and each of the connection rings 801 projects rearward. The support shaft 802 extend in the up/down direction. When the support shaft 802 is inserted in the connection rings 801, the main body portion 41C and the rear body 45 are connected to each other in order for the rear body 45 to be able to swing in the left/right direction with respect to the main body portion 41C.

An eyelet 52C for attaching a hook is provided on the lower portion of the rear edge portion 451 of the rear body 45. The double hook 79 is attached to the eyelet 52C after the core body 11C is attached to the inside of the exterior body 12C.

As shown in FIG. 18, the core body 11C includes a holding member 55C for holding the attitude of the tail portion 121 of the exterior body 12C. The holding member 55C is formed from a soft resin material such as silicon, elastomer, or rubber, and has appropriate elasticity. The holding member 55C is formed to be thin in the left/right direction of the lure 10C. A base edge portion 91 of the holding member 55C is attached to the rear edge portion 451 of the rear body 45, and the holding member 55C extends rearward from the rear edge portion 451. An extension edge 92 of the holding member 55C reaches the tail fin 25 of the exterior body 12C.

The holding member 55C may be fixed to the rear body 45, or may be attached to the rear body 45 in a detachable manner so as to be replaceable. In addition, the holding member 55C may be formed to extend rearward from the rear edge portion 451 of the rear body 45, and as is the case with the holding member 55B, may be formed in a loop shape by a linear member.

The holding member 55C of the present embodiment includes a straight portion 93, a vertical fin 94, and the anal fin 24C, wherein the straight portion 93 extends approximately straight from the base edge portion 91 to the extension edge 92, the vertical fin 94 extends upward from the upper edge portion of the straight portion 93, and the anal fin 24C is in a shape of a narrow-width plate extending from the lower portion of the base edge portion 91 rearward and diagonally downward. In a state where the core body 11C is attached to the inside of the exterior body 12C, the anal fin 24C projects to outside from the insertion hole 38. Since the anal fin 24C is formed integral with the holding member 55C, the anal fin 24C produces an effect of a keel of a ship. This suppresses waterflow in the rear of the anal fin 24C from being disordered. In addition, it suppresses the rear portion of the lure 10C from excessively rolling.

The vertical fin 94 is a plate-like member extending vertically upward from the upper edge portion of the straight portion 93. The vertical fin 94 is formed to be narrower in width than the straight portion 93. The upper edge of the vertical fin 94 reaches up to the upper portion of the tail portion 121 of the exterior body 12C, and mainly holds the attitude of the upper portion of the tail portion 121. In addition the vertical fin 94 plays a role of regulating the water flow passing through the inside of the tail portion 121 so as to be approximately equal on both sides during retrieving of the lure 10C, thereby suppressing the tail portion 121 or the tail fin 25 from excessively flapping.

With the above-described configuration of the holding member 55C, as shown in FIG. 15, in a state (the state shown in FIG. 15) where the core body 11C is stored to the inside of the exterior body 12C and the exterior body 12C is attached to the core body 11C, the holding member 55C is disposed in a space 62 between the rear edge portion 431 and the tail portion 121. In other words, the holding member 55C extends from the rear edge portion 451 of the rear body 45 of the core body 11C toward a space between an inner surface of the tail portion 121 and the rear edge portion 451.

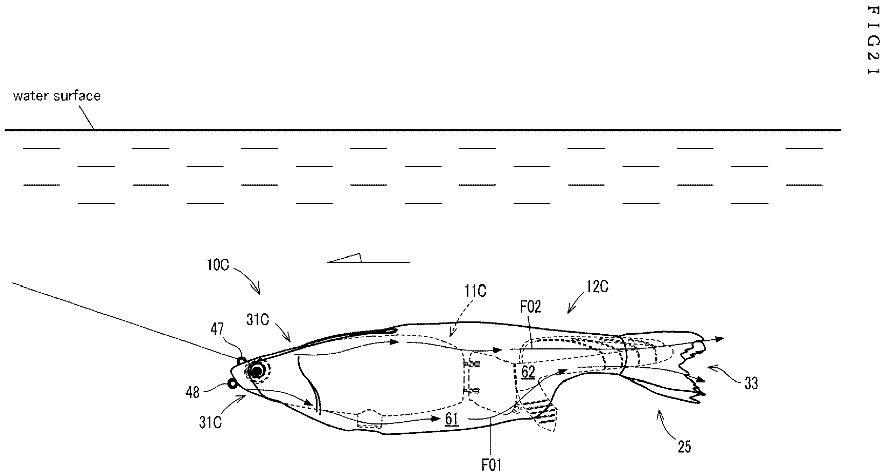

With this configuration, as shown in FIG. 21, when the lure 10C is thrown into water and retrieved, water is taken from both upper and lower gaps of the opening 31C into the exterior body 12C, and the waterflows F01 and F02 pass through the upper and lower portions of the space 61 and the space 62 inside the exterior body 12C, and are released to outside from the opening 33. This makes it possible for the tail portion 121 and the tail fin 25 to move more strongly in a swinging motion during retrieving of the lure 10C. In addition, in the tail portion 121 and the tail fin 25, the upper portion and the lower portion move with approximately the same strength each other in a swinging motion.

In addition, with the rear body 45 swingable with respect to the main body portion 41C and the elastic holding member 55C provided, the tail portion 121 and the tail fin 25 move swinging in the left/right direction when the lure 10C is retrieved, making it possible for the lure 10C to realize a realistic movement of the bait fish.

It is noted that various configurations disclosed in the above-described embodiments may be replaced or changed with other configurations having the same functions in other embodiments.

### [Appended notes on the invention]

The following notes are appended concerning a summary of the invention extracted from the embodiments. It is noted that the configurations and processing functions explained in the following notes can be arbitrarily selected and combined.

### <Note 1>

A fishing lure comprising:
a core body; and
a swing member attached to the core body, formed from a sheet-like flexible material, and swingable with respect to the core body.

### <Note 2>

The fishing lure according to Note 1, wherein the swing member is attached to the core body in a detachable manner.

### <Note 3>

The fishing lure according to Note 1 or 2, wherein the swing member includes an extension portion,
the extension portion is formed from the flexible material into a hollow shape to form a space between the swing member itself and the core body, and extends more rearward than a rear edge portion of the core body.

### <Note 4>

The fishing lure according to Note 3, further comprising:
an inflow portion configured to allow water from front to be taken into the space during retrieving of the fishing lure; and
an outflow portion provided on the extension portion and configured to allow the water taken into the space to flow out to outside.

### <Note 5>

The fishing lure according to Note 4, wherein
the swing member is formed into a hollow shape in such a way as to form the space between the swing member itself and the core body and to store the core body to an inside thereof, wherein
in a state where the core body is stored to the inside of the swing member, a part of the swing member is engaged to the core body, the inflow portion is formed more on a front side on the swing member than the extension portion, and
the outflow portion is formed on the extension portion that is on a rear side of the swing member.

### <Note 6>

The fishing lure according to Note 4 or 5, wherein the outflow portion includes a rear-side opening formed at a rear edge portion of the extension portion. It is noted that a plurality of rear-side openings may be formed at the rear edge portion.

### <Note 7>

The fishing lure according to any one of Notes 4 to 6, wherein the outflow portion includes a plurality of holes provided on a surface of the extension portion.

### <Note 8>

The fishing lure according to any one of Notes 4 to 7, wherein the inflow portion includes a front-side opening formed at a front edge portion on a front side of the swing member. It is noted that a plurality of front-side openings may be formed at the front edge portion.

### <Note 9>

The fishing lure according to any one of Notes 1 to 8, wherein the flexible material is a cloth, a nonwoven fabric, or a resin sheet. It is noted that the flexible material may be a sheet-like member formed from a combination of any ones of the cloth, the nonwoven fabric, and the resin sheet.

### <Note 10>

The fishing lure according to any one of Notes 1 to 9, wherein the flexible material is a processed surface skin formed by processing a surface skin of a predetermined living thing.

### <Note 11>

The fishing lure according to any one of Notes 1 to 10, further comprising an engaging portion configured to engage the part of the swing member to the core body in the state where the core body is stored to the inside of the swing member.

### <Note 12>

The fishing lure according to any one of Notes 1 to 11, further comprising a holding member provided on the core body and extending from the core body toward the space between the swing member and the core body, the holding member configured to hold an attitude of the swing member.

### <Note 13>

The fishing lure according to Note 12, wherein the holding member is an elastic linear member.

### <Note 14>

The fishing lure according to Note 12 or 13, wherein
the core body includes:
a main body portion disposed on a front side of the fishing lure; and
a rear main body connected to a rear edge portion of the main body portion in a swingable manner, and
the holding member extends from a rear edge portion of the rear main body toward the space.

### <Note 15>

The fishing lure according to any one of Notes 1 to 14, wherein
the swing member is formed into a hollow shape in such a way as to store the core body to an inside thereof, and includes a takeout port configured to allow the core body to be stored to the inside of the swing member or to allow the core body to be taken out from the inside of the swing member.

### <Note 16>

The fishing lure according to any one of Notes 1 to 15, wherein
the core body includes
an inner flow path extending from a first opening to a second opening, wherein the first opening is formed in a vicinity of a front edge portion of the core body, and the second opening is formed in rear of the first opening on the core body.

### <Note 17>

The fishing lure according to any one of Notes 1 to 16, wherein
the swing member is formed in a shape imitating a surface shape of a bait.

### <Note 18>

An exterior member constituting an exterior of a fishing lure, wherein
the exterior member is attached to a core body of the fishing lure in a detachable manner, and is formed from a sheet-like flexible material.

### <Note 19>

The exterior member according to Note 18 formed from the flexible material into a hollow shape in such a way as to store the core body to an inside thereof.

## Claims

1. A fishing lure comprising:
a core body; and
a swing member attached to the core body, formed from a sheet-like flexible material, and swingable with respect to the core body.

2. The fishing lure according to claim 1, wherein
the swing member is attached to the core body in a detachable manner.

3. The fishing lure according to claim 1 or 2, wherein
the swing member includes an extension portion,
the extension portion is formed from the flexible material into a hollow shape to form a space between the swing member itself and the core body, and extends more rearward than a rear edge portion of the core body.

4. The fishing lure according to claim 3, further comprising:
an inflow portion configured to allow water from front to be taken into the space during retrieving of the fishing lure; and
an outflow portion provided on the extension portion and configured to allow the water taken into the space to flow out to outside.

5. The fishing lure according to claim 4, wherein
the swing member is formed into a hollow shape in such a way as to form the space between the swing member itself and the core body and to store the core body to an inside thereof, wherein in a state where the core body is stored to the inside of the swing member, a part of the swing member is engaged to the core body, the inflow portion is formed more on a front side on the swing member than the extension portion, and the outflow portion is formed on the extension portion that is on a rear side of the swing member.

6. The fishing lure according to claim 4, wherein
the outflow portion includes a rear-side opening formed at a rear edge portion of the extension portion.

7. The fishing lure according to claim 4, wherein
the outflow portion includes a plurality of holes provided on a surface of the extension portion.

8. The fishing lure according to claim 4, wherein
the inflow portion includes a front-side opening formed at a front edge portion on a front side of the swing member.

9. The fishing lure according to claim 1 or 2, wherein
the flexible material is a cloth, a nonwoven fabric, or a resin sheet.

10. The fishing lure according to claim 1 or 2, wherein
the flexible material is a processed surface skin formed by processing a surface skin of a predetermined living thing.

11. The fishing lure according to claim 5, further comprising
an engaging portion configured to engage the part of the swing member to the core body in the state where the core body is stored to the inside of the swing member.

12. The fishing lure according to claim 1 or 2, further comprising
a holding member provided on the core body and extending from the core body toward the space between the swing member and the core body, the holding member configured to hold an attitude of the swing member.

13. The fishing lure according to claim 12, wherein
the holding member is an elastic linear member.

14. The fishing lure according to claim 12, wherein
the core body includes a main body portion and a rear main body, wherein the main body portion is disposed on a front side of the fishing lure, the rear main body is connected to a rear edge portion of the main body portion in a swingable manner, and the holding member extends from a rear edge portion of the rear main body toward the space.

15. The fishing lure according to claim 1 or 2, wherein
the swing member is formed into a hollow shape in such a way as to store the core body to an inside thereof, and includes a takeout port configured to allow the core body to be stored to the inside of the swing member or to allow the core body to be taken out from the inside of the swing member.

16. The fishing lure according to claim 4, wherein
the core body includes an inner flow path extending from a first opening to a second opening, wherein the first opening is formed in a vicinity of a front edge portion of the core body, and the second opening is formed in rear of the first opening on the core body.

17. The fishing lure according to claim 1 or 2, wherein
the swing member is formed in a shape imitating a surface shape of a bait.

18. An exterior member constituting an exterior of a fishing lure, attached to a core body of the fishing lure in a detachable manner, and formed from a sheet-like flexible material.

19. The exterior member according to claim 18 formed from the flexible material into a hollow shape in such a way as to store the core body to an inside thereof.
